# EUROPEAN PATENT APPLICATION

(11) **EP 4 609 965 A1**
(43) Date of publication of application: **03.09.2025**
(21) Application number: 24769846.7
(22) Date of filing: 07.03.2024
(51) Int. Cl.: B21D 26/02, B23P 15/00

(54) **METHOD AND PROCESS FOR MULTI-ELEMENT MATERIAL MIXED FORMING IN ONE TIME OF MOLD OPENING/CLOSING, AND COMPONENT**

(30) Priority: 13.03.2023 CN 202310235318
(71) Applicant: INTELLIGENT AEROSPACE MANUFACTURING TECHNOLOGY (BEIJING) CO., LTD., Beijing 100083 (CN)
(72) Inventor: CHENG, Pengzhi, Beijing 100083 (CN); LI, Xiaoqiang, Beijing 100083 (CN); DING, Zhen, Beijing 100083 (CN); SONG, Kai, Beijing 100083 (CN); CHENG, Gang, Beijing 100083 (CN); RUAN, Shangwen, Beijing 100083 (CN); XIE, Yasu, Beijing 100083 (CN); ZHANG, Shenglun, Beijing 100083 (CN)
(74) Representative: Bayramoglu et al.
(86) International application number: PCT/CN2024/080590
(87) International publication number: WO 2024/188153

(57) **Abstract**

A multi-material hybrid forming method based on single mold opening and closing is provided. A multi-material includes a metal material such as an ultra-high-strength steel/aluminum alloy tube and aluminum/magnesium, and a non-metal material such as a fiber-reinforced resin. The ultra-high-strength steel/aluminum alloy tube is subjected to instantaneous heating, conformal gas bulging, quench hardening, injection molding, and aluminum/magnesium injection in a single mold opening and closing cycle. This greatly simplifies component manufacturing processes, eliminates subsequent welding and other processes, enables lightweight tubular beam structural components, and suits integrated manufacturing of ultra-high-strength tubular beam structures with profiled cross-sections. A multi-material component fabricated by the above-mentioned method is further provided.

## Description

### TECHNICAL FIELD

The present disclosure belongs to an automotive tubular beam component production method, and in particular to a multi-material hybrid forming method and process based on single mold opening and closing, and a multi-material component.

### BACKGROUND TECHNOLOGY

The design and processing techniques of tubular beam structural components determine vehicle evaluation metrics such as safety, reliability/durability, and noise, vibration, and harshness (NVH). However, traditional integrated die-casting and stamping-welding processes used in manufacturing steel tubular beam structures exhibit certain limitations in enhancing vehicle performance and lightweight optimization.

Although an integrated die-casting process has been widely adopted in the automotive industry, it is constrained by casting-suitable materials such as aluminum alloys and magnesium alloys with insufficient strength (yield strength around 300 MPa). Consequently, this process is not suitable for manufacturing slim tubular beam structural components and sub-assemblies in upper body structures, such as A-pillar and B-pillar sub-assembly components. The integrated die-casting of large automotive components such as body side panels presents challenges including excessive mold closing force, significant component deformation, insufficient local strength in slim components such as A-pillar tubular beams, along with complex manufacturing processes and high costs.

The integrated injection molding process for traditional tubular beams and connectors is confined to finished tubular beams and post-hydroforming injection molding. It fails to apply treatments such as heating, conformal gas bulging, and quenching to the main load-bearing tube blanks, thereby compromising the geometry and mechanical strength of profiled tubular beams. Furthermore, this process introduces an additional connection procedure instead of integrating the synchronous procedure such as aluminum/magnesium injection.

The existing hydroforming process for tubular components involves sealing both ends of the metal tube in a cold state, and injecting a high-pressure liquid into the tube cavity to force the raw metal tube to conform to the mold. It typically uses a hydroforming machine, featuring cold-state liquid filling and low-yield-strength materials. Ultra-high-strength titanium alloys with elevated yield strength are unsuitable for hydroforming due to their incompatibility with cold-state processing and the requirement for an excessively high mold closing force.

Hybrid forming targets cold-state formed components, such as those to be assembled on metal structural components through plastic fasteners (e.g., automotive instrument panel brackets). The current hybrid forming process combines tube hydroforming with injection molding to form an integrated structure within a single process cycle. However, this method employs simplified temperature control with forming temperatures only around 200°C, which excludes quenching processes.

In summary, existing hot gas bulging, injection molding, die-casting, and hydroforming processes are all single-stage operations incapable of producing composite-structured components. Besides, the hybrid forming is limited to cold-formed components and unsuitable for high-strength materials.

To ensure that the body structures meet rigidity, strength, and lightweight requirements, the present disclosure proposes a multi-material hybrid forming method and process based on single mold opening and closing, and a multi-material component. The multi-material includes metal materials such as ultra-high-strength steel/aluminum alloy tubes and aluminum/magnesium, and non-metal materials such as fiber-reinforced resins. The ultra-high-strength steel tube (e.g. aluminum alloy tube) is subjected to instantaneous heating, conformal gas bulging, quench hardening, injection molding (non-metal materials such as fiber-reinforced resins), and aluminum/magnesium (metal) injection in a single mold opening and closing cycle. The present disclosure greatly simplifies a body manufacturing process and eliminates subsequent welding and other processes, thereby enabling lightweight tubular beam structural components, and suiting integrated manufacturing of ultra-high-strength tubular beam structures with profiled cross-sections.

### CONTENT OF THE INVENTION

The present disclosure relates to a multi-material hybrid forming method based on single mold opening and closing, specifically including the following steps:
loading a metal tube blank into a mold cavity;
closing a mold, and sealing two ends of the metal tube blank;
heating the metal tube blank to a first specified temperature;
bulging the metal tube blank, including: injecting a first-pressure high-pressure bulging medium into an end port of the metal tube blank at a side, allowing a wall of the metal tube blank to conform to the mold, where
the bulging the metal tube blank further includes: injecting a first-pressure bulging medium into a space inside the mold cavity and outside the metal tube blank to control a deformation amount at a local position of the metal tube blank; and
injecting a first material: depressurizing and recovering the first-pressure bulging medium; and adjusting a temperature of the mold cavity to a second specified temperature, injecting a first material in a liquid or semi-solid state into a first material space formed between an inner wall of the mold cavity and an outer wall of the metal tube blank, and integrally forming and bonding the first material onto the metal tube blank bulged, where the first material differs from a metal material of the metal tube; and
performing rapid quenching in the mold, and demolding.

Preferably, during an entire process of injecting the first material, a second low-pressure bulging medium is injected into a second material space formed between the inner wall of the mold cavity and the outer wall of the metal tube blank to control a deformation amount at a local position of the metal tube blank, where the second material differs from the first material and the metal material of the metal tube blank.

Preferably, after injecting the first material, the method further includes the following step before quenching: depressurizing and recovering the second-pressure bulging medium; and adjusting the temperature of the mold cavity to a third specified temperature, injecting a second material in the liquid or semi-solid state into the second material space formed between the inner wall of the mold cavity and the outer wall of the metal tube blank, and integrally forming and bonding the second material and the first material onto the metal tube blank bulged;
alternatively,
the method further includes the following step while injecting the first material: injecting the second material in the liquid or semi-solid state into the second material space formed between the inner wall of the mold cavity and the outer wall of the metal tube blank, and integrally forming and bonding the second material and the first material onto the metal tube blank bulged.

Preferably, during the entire process of injecting the first material, a third-pressure bulging medium is injected into the metal tube blank to control a deformation amount at a local position of the tube blank; and during an entire process of injecting the second material, a fourth-pressure bulging medium is injected into the metal tube blank to control a deformation amount at a local position of the tube blank.

Preferably, the first material is a metal, and the second material is a non-metal.

Preferably, the first material is aluminum, magnesium, or an aluminum-magnesium alloy, and the second material is a plastic or a composite material such as fiber-reinforced resin.

Preferably, the metal tube blank includes a steel tube blank, an aluminum tube blank, a carbon-clad tube, and a carbon-clad tube filled with a reinforcing material in terms of type; and the carbon-clad tube is a metal tube blank cladded with a carbon fiber, and the reinforcing material filled in the metal tube blank is aluminum foam, polyfoam or a foaming agent.

Preferably, the second specified temperature is less than or equal to the first specified temperature; and the third specified temperature is less than the second specified temperature.

The present disclosure further relates to a multi-material hybrid forming process based on single mold opening and closing, using the above-mentioned forming method.

The present disclosure further relates to a multi-material component, fabricated by the above-mentioned forming method.

The present disclosure completes multiple processes of the ultra-high-strength metal tube (e.g., aluminum alloy tube) in a single mold opening and closing cycle: instantaneous heating, conformal gas bulging, quench hardening, non-metal (e.g., plastic, fiber-reinforced resin) injection, and metal (e.g., aluminum/magnesium/aluminum-magnesium alloy) injection. The present disclosure is suitable for integrated manufacturing of automotive sub-assembly components.

### DESCRIPTION OF THE DRAWINGS

FIG. 1 is a structural schematic diagram of a device according to the present disclosure;
FIG. 2 is a process flowchart according to the present disclosure;
FIG. 3 is a schematic diagram of different metal tube blanks according to the present disclosure;
FIG. 4 is a schematic diagram of loading a metal tube blank into a mold according to the present disclosure;
FIG. 5 is a schematic diagram of bulging the metal tube blank according to the present disclosure;
FIG. 6 is a schematic diagram of injecting a metal according to the present disclosure;
FIG. 7 is a schematic diagram of injecting a non-metal according to the present disclosure;
FIG. 8 is a schematic diagram of bulging medium depressurization and quenching for a tubular beam according to the present disclosure; and
FIG. 9 is a schematic diagram of demolding a tubular beam product according to the present disclosure.

Reference Numerals: 1. feeding conveyor line; 2. main machine; 3. unloading conveyor line; 4. demolding agent spraying robot; 5. ultra-high-pressure medium system; 6. mold temperature control system; 7. non-metal injection system; 8. metal injection system; 9. high-power heating system; 10. demolding agent injection system; and 11. component handling system;
21. aluminum tube blank or steel tube blank; 22. carbon fiber; and 23. reinforcing material; and
111. metal tube blank; 13. non-metal injection runner; 14. mold; 15. metal injection runner; 16. bulging medium; 17. non-metal injection space; and 18. metal injection space.

### SPECIFIC IMPLEMENTATIONS

The following clearly and completely describes the technical solutions of the present disclosure with reference to drawings. Apparently, the described embodiments are merely some rather than all of the embodiments of the present disclosure. All other embodiments obtained by a person of ordinary skill in the art based on the embodiments of the present disclosure without creative efforts shall fall within the protection scope of the present disclosure.

In the description of the present disclosure, it should be noted that orientations or position relationships indicated by terms such as "center", "top", "bottom", "left", "right", "vertical", "horizontal", "inner", and "outer" are based on the orientation or position relationships shown in the drawings, for ease of describing the present disclosure and simplifying the description only, rather than indicating or implying that the indicated device or element must have a particular orientation or be constructed and operated in a particular orientation. Therefore, these terms should not be understood as a limitation to the present disclosure. Moreover, the terms "first", "second", and "third" are used only for the purpose of description, and are not intended to indicate or imply relative importance.

In the description of the present disclosure, it should be noted that, unless otherwise clearly specified, meanings of terms "mount", "connected with", and "connected to" should be understood in a broad sense. For example, the connection may be a fixed connection, a removable connection, or an integral connection; may be a mechanical connection or an electrical connection; may be a direct connection or an indirect connection by using an intermediate medium; or may be intercommunication between two elements. Those of ordinary skill in the art may understand specific meanings of the foregoing terms in the present disclosure based on a specific situation.

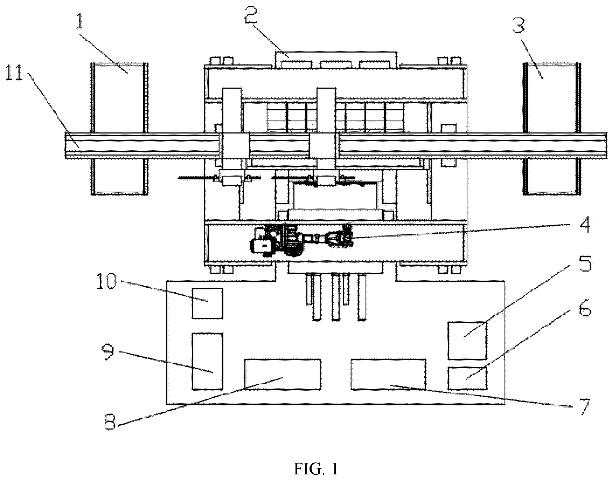

As shown in FIG. 1, a multi-material hybrid forming device based on single mold opening and closing includes feeding conveyor line 1, main machine 2, unloading conveyor line 3, demolding agent spraying robot 4, ultra-high-pressure medium system 5, mold temperature control system 6, non-metal material injection system 7, metal material injection system 8, high-power heating system 9, demolding agent injection system 10, and component handling system 11.

The feeding conveyor line 1 is typically configured to feed a metal tube blank through a belt conveyor or pneumatic slide table. The metal tube blank is an ultra-high-strength steel tube or aluminum alloy tube.

The main machine 2 includes a mold cavity, and is configured to open and close a mold.

The unloading conveyor line 3 conveys a formed workpiece and has a component buffering function. The unloading conveyor line typically adopts a stainless steel structure or a steel plate chain structure.

The demolding agent spraying robot 4 sprays a demolding agent on a surface of the mold cavity before each component enters the mold cavity, facilitating demolding of formed components. The demolding agent spraying robot 4 is connected to the demolding agent injection system through a tubing. The demolding agent spraying robot adopts a six-axis robot or a gantry robot with a demolding agent spraying end-effector.

Regarding the ultra-high-pressure medium system 5, the ultra-high-pressure medium system 5 is configured to perform loading, pressure maintenance and recovery of an ultra-high-pressure bulging medium during hot gas bulging of the metal tube blank, as well as outputting of a low-pressure bulging medium. Preferably, the bulging medium is any one of gas, water, oil or low-melting-point metal. Preferably, the bulging medium is nitrogen or inert gas, and the low-melting-point metal is tin.

The mold temperature control system 6 injects a medium at a certain temperature into the mold through a tubing to heat or cool the component in the mold.

The non-metal material injection system 7 includes a non-metal injection runner and a non-metal material injection barrel. The non-metal material injection barrel is connected to the mold cavity of the main machine 2 through the non-metal injection runner, and is configured to inject a non-metal medium into the mold cavity. The non-metal material injection barrel accommodates the non-metal medium required for component forming, and possesses heating and stirring functions to melt the solid non-metal medium into a liquid or semi-solid non-metal medium for injection into the mold cavity.

The metal material injection system 8 includes a metal injection runner and a metal material injection barrel. The metal material injection barrel is connected to the mold cavity of the main machine 2 through the metal injection runner, and is configured to inject a metal medium into the mold cavity. The metal material injection barrel accommodates the metal medium required for component forming, and possesses heating and stirring functions to melt the solid metal medium into a liquid or semi-solid metal medium for injection into the mold cavity.

The high-power heating system 9 is connected to the electrode through a conductor, and is configured to perform component heating in the mold cavity.

The demolding agent injection system 10 is configured to store and deliver the demolding agent, and is connected to the demolding agent spraying robot through a demolding agent tubing so as to spray the demolding agent into the mold cavity.

Regarding the component handling system 11, the component handling system includes a feeding manipulator, an unloading manipulator, and a gantry frame to perform feeding and unloading handling during production. The manipulator possesses high-temperature resistance to prevent thermal damage during component grasping. The component handling system is replaceable by two six-axis robots.

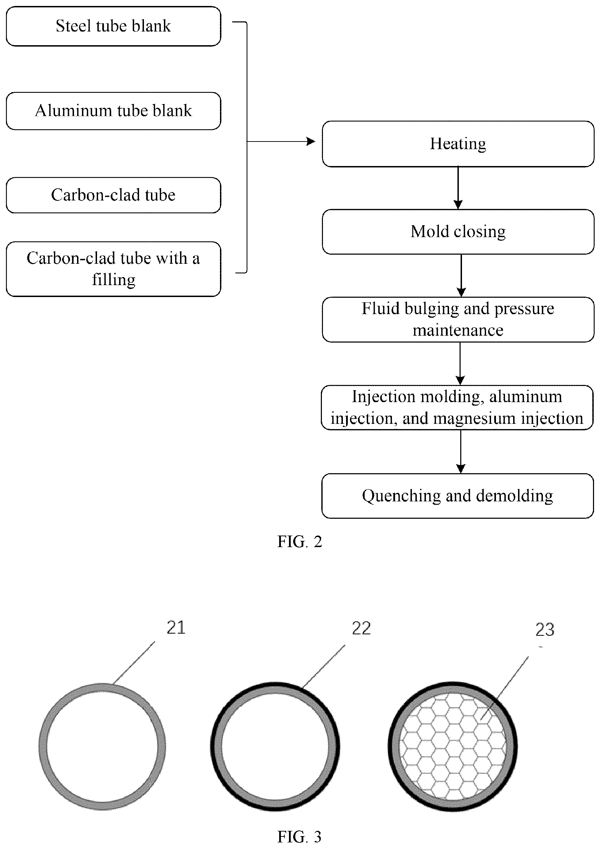

FIG. 2 illustrates core steps of a multi-material hybrid forming method based on single mold opening and closing. Specifically, the multi-material hybrid forming method based on single mold opening and closing includes the following steps.

The feeding conveyor line 1 deliver the metal tube blank to a feeding position. Simultaneously, the demolding agent spraying robot 4 and the demolding agent injection system 10 operate to spray the demolding agent into the mold cavity of the main machine 2. FIG. 3 is a schematic diagram of a type of the metal tube blank in the present disclosure. In terms of type, the metal tube blank includes steel tube blank 21, aluminum tube blank 21, carbon-clad tube 22, and carbon-clad tube 23 filled with a reinforcing material, etc. The carbon-clad tube is a metal tube blank cladded with a carbon fiber material.

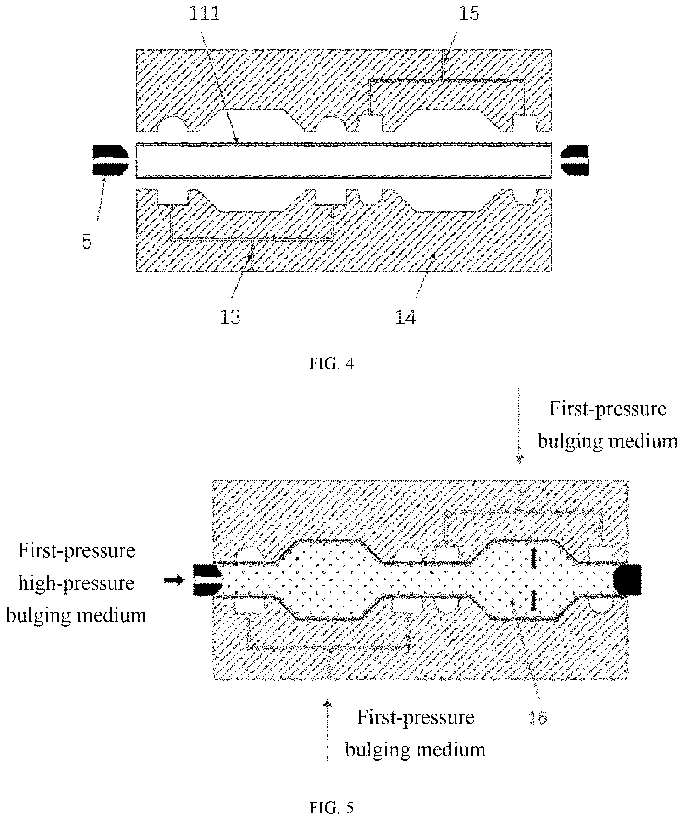

The component handling system 11 grasps and loads the metal tube blank into the mold cavity of the main machine 2. As shown in FIG. 4, the main machine moves to close the mold. The side-push oil cylinders of the main machine 2 move to seal the two ends of the metal tube blank by two end sealing plugs.

The high-power heating system 9 heats the metal tube blank to a specified temperature through the electrode, and the mold temperature control system 6 adjusts the mold cavity to a first specified temperature.

The metal tube blank is bulged. As shown in FIG. 5, the ultra-high-pressure medium system 5 injects a first-pressure high-pressure bulging medium (e.g., high-pressure gas) into a metal tube blank port at a side. The first-pressure high-pressure bulging medium allows a wall of the metal tube blank to conform to the mold through high-pressure bulging. The ultra-high-pressure medium system 5 injects a first-pressure bulging medium (e.g., low-pressure gas) into a space inside the mold cavity and outside the metal tube blank to control a deformation amount at a local position of the metal tube blank. Preferably, the first-pressure bulging medium is injected and withdrawn through the metal injection runner 15 and the non-metal injection runner 13, respectively.

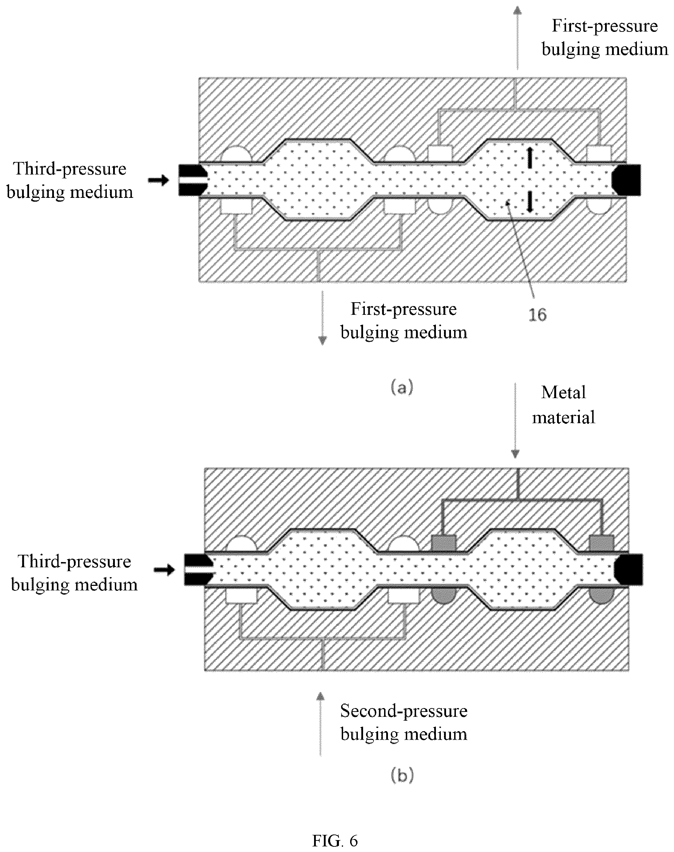

A metal is injected. As shown in FIG. 6, the first-pressure bulging medium is depressurized and recovered. The mold temperature control system 6 adjusts the mold cavity to a second specified temperature. The second specified temperature is less than or equal to the first specified temperature. The metal injection system 8 injects a liquid or semi-solid metal (e.g., aluminum-magnesium alloy) into a metal injection space inside the mold cavity and outside the metal tube blank through the metal injection barrel, enabling integral forming and bonding of the metal onto the metal tube blank bulged. During the entire metal injection process, the ultra-high-pressure medium system 5 injects a third-pressure bulging medium into the metal tube blank to control a deformation amount at a local position of the tube blank. During the entire metal injection process, the ultra-high-pressure medium system 5 injects a second-pressure bulging medium into a space outside the metal injection space inside the mold cavity and outside the metal tube blank to control a deformation amount at a local position of the metal tube blank.

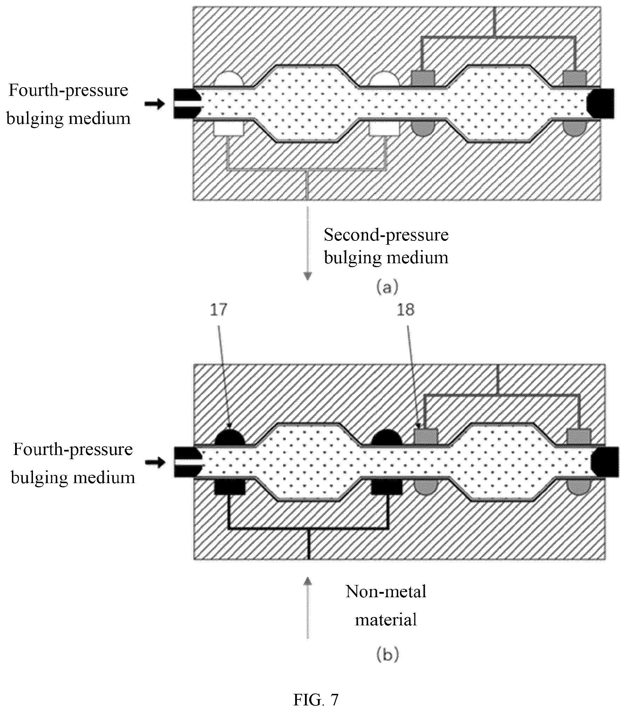

A non-metal is injected. As shown in FIG. 7, the second-pressure bulging medium is depressurized and recovered. The mold temperature control system 6 adjusts the mold cavity to a third specified temperature. The third specified temperature is less than the first specified temperature and the second specified temperature. The non-metal injection system 7 injects a liquid or semi-solid non-metal (e.g., plastic) into the non-metal injection space inside the mold cavity and outside the metal tube blank through the non-metal injection barrel, enabling integral forming and bonding of the non-metal onto the metal tube blank bulged. During the entire non-metal injection process, the ultra-high-pressure medium system injects a fourth-pressure bulging medium into the metal tube blank to control a deformation amount at a local position of the tube blank.

Preferably, the metal injection step and the non-metal injection step of the present disclosure are performable simultaneously to improve efficiency.

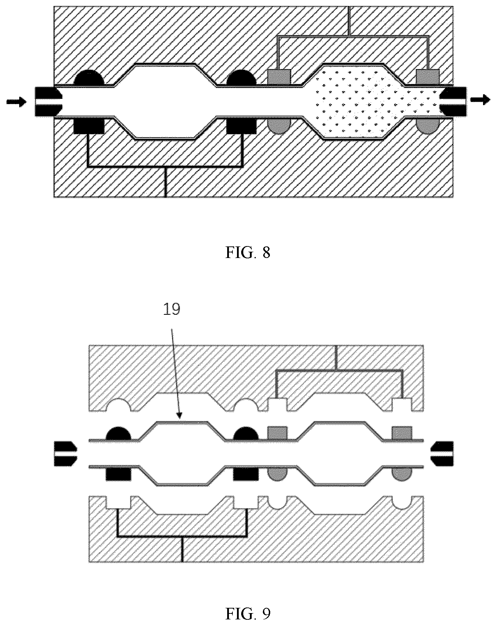

The bulging medium is depressurized and recovered, and in-mold rapid quenching is performed, as shown in FIG. 8.

When the forming process is completed, the main machine 2 opens the mold. The component handling system 11 grasps and loads a multi-material component formed by hybrid forming to the unloading conveyor system 3. The unloading conveyor system conveys the formed component to a designated position, as shown in FIG. 9.

It should be understood that the serial number of each step in the embodiment of the present disclosure does not indicate the order of performing the process. The order of performing each process is determined by its function and internal logic, and should not limit the implementation of the embodiments of the present disclosure.

Although the embodiments of the present disclosure have been illustrated and described, it should be understood that those of ordinary skill in the art may make various changes, modifications, replacements and variations to the above embodiments without departing from the principle and spirit of the present disclosure, and the scope of the present disclosure is limited by the appended claims and their legal equivalents.

## Claims

1. A multi-material hybrid forming method based on single mold opening and closing, specifically comprising the following steps in sequence:
loading a metal tube blank into a mold cavity;
closing a mold, and sealing two ends of the metal tube blank;
heating the metal tube blank to a first specified temperature;
bulging the metal tube blank, comprising: injecting a first-pressure high-pressure bulging medium into an end port of the metal tube blank at a side, allowing a wall of the metal tube blank to conform to the mold;
**characterized in that**,
the bulging the metal tube blank further comprises: injecting a first-pressure bulging medium into a space formed between an inner wall of the mold cavity and an outer wall of the metal tube blank to control a deformation amount at a local position of the metal tube blank; and
injecting a first material: depressurizing and recovering the first-pressure bulging medium; and adjusting a temperature of the mold cavity to a second specified temperature, injecting a first material in a liquid or semi-solid state into a first material space formed between the inner wall of the mold cavity and the outer wall of the metal tube blank, and integrally forming and bonding the first material onto the metal tube blank bulged, wherein the first material differs from a metal material of the metal tube; and
performing rapid quenching in the mold, and demolding.

2. The method according to claim 1, **characterized in that** during an entire process of injecting the first material, a second-pressure bulging medium is injected into a second material space formed between the inner wall of the mold cavity and the outer wall of the metal tube blank to control a deformation amount at a local position of the metal tube blank, wherein the second material differs from the first material and the metal material of the metal tube blank.

3. The method according to claim 2, **characterized in that** after injecting the first material, the method further comprises the following step before quenching: depressurizing and recovering the second-pressure bulging medium; and adjusting the temperature of the mold cavity to a third specified temperature, injecting a second material in the liquid or semi-solid state into the second material space formed between the inner wall of the mold cavity and the outer wall of the metal tube blank, and integrally forming and bonding the second material and the first material onto the metal tube blank bulged;
alternatively,
the method further comprises the following step while injecting the first material: injecting the second material in the liquid or semi-solid state into the second material space formed between the inner wall of the mold cavity and the outer wall of the metal tube blank, and integrally forming and bonding the second material and the first material onto the metal tube blank bulged.

4. The method according to claim 3, **characterized in that** during the entire process of injecting the first material, a third-pressure bulging medium is synchronously injected into the metal tube blank to control a deformation amount at a local position of the tube blank; and alternatively, during an entire process of injecting the second material, a fourth-pressure bulging medium is synchronously injected into the metal tube blank to control a deformation amount at a local position of the tube blank.

5. The method according to any one of claims 3 and 4, **characterized in that** the first material is a metal, and the second material is a non-metal.

6. The method according to any one of claims 3 and 4, **characterized in that** the first material is aluminum, magnesium, or an aluminum-magnesium alloy, and the second material is a plastic or a composite material.

7. The method according to any one of claims 1 to 4, **characterized in that** the metal tube blank comprises a steel tube blank, an aluminum tube blank, a carbon-clad tube, and a carbon-clad tube filled with a reinforcing material in terms of type; and the carbon-clad tube is a metal tube blank cladded with a carbon fiber, and the reinforcing material filled in the metal tube blank is aluminum foam, polyfoam or a foaming agent.

8. The method according to any one of claims 3 and 4, **characterized in that** the second specified temperature is less than or equal to the first specified temperature; and the third specified temperature is less than the first specified temperature or the second specified temperature.

9. A multi-material hybrid forming process based on single mold opening and closing, **characterized by** using the method according to any one of claims 1 to 8.

10. A multi-material component, **characterized by** being fabricated by the method according to any one of claims 1 to 8.
